(19) Europäisches Patentamt
European Patent Office
Office européen des brevets

(11) Veröffentlichungsnummer : **0 139 871**
**B1**

(12) # EUROPÄISCHE PATENTSCHRIFT

(45) Veröffentlichungstag der Patentschrift : **03.12.86**

(51) Int. Cl.⁴ : **C 08 F 6/16**, C 08 F265/08 // (C08F265/08, 226:06)

(21) Anmeldenummer : **84108456.9**

(22) Anmeldetag : **18.07.84**

(54) **Verfahren zur Behandlung von (Co)polymerisatdispersionen.**

(30) Priorität : **28.07.83 DE 3327190**

(43) Veröffentlichungstag der Anmeldung : **08.05.85 Patentblatt 85/19**

(45) Bekanntmachung des Hinweises auf die Patenterteilung : **03.12.86 Patentblatt 86/49**

(84) Benannte Vertragsstaaten : **BE DE FR GB NL**

(56) Entgegenhaltungen :
**EP-A- 0 028 348**
**GB-A- 905 465**
**US-A- 3 027 311**

(73) Patentinhaber : **BASF Aktiengesellschaft**
**Carl-Bosch-Strasse 38**
**D-6700 Ludwigshafen (DE)**

(72) Erfinder : **Mitulla, Konrad, Dr.**
**An der Froschlache 23**
**D-6700 Ludwigshafen (DE)**
Erfinder : **McKee, Graham Edmund, Dr.**
**Kastanienweg 8**
**D-6940 Weinheim (DE)**
Erfinder : **Echte, Adolf, Dr-**
**Leuschnerstrasse 42**
**D-6700 Ludwigshafen (DE)**
Erfinder : **Schwaab, Josef, Dr.**
**Rieslingweg 8**
**D-6735 Maikammer (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Die vorliegende Erfindung betrifft ein Verfahren zur Behandlung von (Meth-)Acrylnitril enthaltenden (Co)Polymerisaten, die in Form einer Dispersion in Wasser vorliegen, und wobei die Dispersion noch (Meth-)Acrylnitril als nicht umgesetzten Monomerenbaustein enthält, unter üblichen Polymerisationsbedingungen in Gegenwart von wasserlöslichen Initiatoren, gegebenenfalls in Gegenwart von üblichen Polymerisationshilfsstoffen, mit Comonomeren.

Polymerisate, die (Meth-)Acrylnitril enthalten, spielen in der Technik eine beträchtliche Rolle. Hier sind die NBR-Kautschuke, Styrol-Acrylnitrilcopolymerisate (SAN), Acrylnitrilpolymerisate vom Barriere-Typ (Ullmanns Encyklopädie der technischen Chemie, Band 19, Seite 275, Verlag Chemie, Weinheim, 1980) und insbesondere die ABS-Polymerisate zu nennen, die sich hauptsächlich aus den Monomeren Acrylnitril, Butadien und Styrol bzw. α-Methylstyrol aufbauen.

Die Herstellung dieser Polymerisate ist nach verschiedenen Verfahren möglich, von denen jedes Vor- und Nachteile hinsichtlich Produkteigenschaften, Ökologie und Kosten besitzt. Der Emulsionsprozeß ist, bedingt durch seine breite Anwendbarkeit, weit verbreitet. In keinem der technisch praktizierten Herstellverfahren werden die Monomeren vollständig umgesetzt. Insbesondere wird (Meth-)Acrylnitril im Emulsionsprozeß aufgrund seiner Wasserlöslichkeit nicht bis zum vollen Umsatz auspolymerisieren. Demgegenüber stand die Forderung der Technik nach möglichst geringen (Meth)-Acrylnitrilgehalten in den Dispersionen, da (Meth)-Acrylnitril wegen seiner Flüchtigkeit in die Abluft gelangen kann.

Es hat auch nicht an Bemühungen gefehlt, die Rest-(Meth)-acrylnitrilgehalte so gering wie nur möglich zu halten.

Zum Stande der Technik nennen wir :

(1) DE-OS 29 09 518
(2) DE-OS 30 06 172
(3) US-PS 4 251 412
(4) US-PS 4 255 307

In (1) wird beschrieben, Acrylnitril aus ABS-Dispersionen destillativ zu entfernen. Dabei besteht allerdings das Problem der Beseitigung von acrylnitrilhaltigem Abwasser und der Einhaltung niedriger Acrylnitrilgehalte in der Abluft. In (2) wird beschrieben, die Restmonomeren der Dispersion in einer nachgeschalteten Polymerisation mit Hilfe von hydrophilen Comonomeren zu entfernen. Der Nachteil des aus (2) bekannten Verfahrens ist, daß zur Erzielung eines niedrigen AN-Gehaltes die Produkteigenschaften negativ beeinflußt worden. In (3) werden zur Erzielung eines niedrigen AN-Gehaltes der Dispersion Amine, in (4) Alkalisulfite zugesetzt. Der Zusatz eines Amins ist lebensmittelrechtlich bedenklich, insbesondere bei Formmassen, die in den Verpackungssektor gehen. Alkalisulfite sind nicht wirksam und erhöhen die Gefahr des Koagulierens der Dispersion.

Der Erfindung lag also die Aufgabe zugrunde, ein Verfahren zu entwickeln, bei dem in einfacher und wirtschaftlich durchführbarer Weise der (Meth-)acrylnitrilgehalt in (Meth-)acrylnitril-haltigen (Co)polymerisat-Dispersionen, insbesondere der Restacrylnitrilgehalt in ABS-Pfropfdispersionen nach der eigentlichen Polymerisation wirksam abgesenkt wird. Die mechanischen Eigenschaften der Polymerisate sollten durch die Maßnahme nicht negativ beeinflußt werden.

Die Aufgabe wird durch die im Patentanspruch 1 genannten Maßnahmen gelöst.

Die Erfindung betrifft somit ein Verfahren zur Behandlung von (Meth-)Acrylnitril (insbesondere Acrylnitril) enthaltenden (Co)Polymerisaten, die in Form einer Dispersion in Wasser vorliegen, und wobei die Dispersion noch (Meth-)Acrylnitril, insbesondere Acrylnitril, als nicht umgesetzten Monomerenbaustein enthält, unter üblichen Polymerisationsbedingungen in Gegenwart von wasserlöslichen Initiatoren, gegebenenfalls in Gegenwart von üblichen Polymerisationshilfsstoffen, mit Comonomeren. Das Verfahren ist dadurch gekennzeichnet, daß man als Comonomere N-Vinyllactame der allgemeinen Formel verwendet

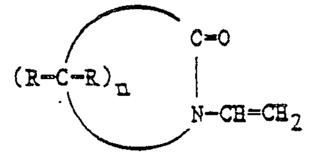

in der die Indices und Substituenten stehen für

n = 3, 4 und 5 und

R = Wasserstoff, Halogen, Alkyl ; Carboxy oder Nitril.

Bevorzugt werden die nichtsubstituierten N-Vinyllactone, und hiervon werden insbesondere N-Vinylpyrrolidon und N-Vinylcaprolactam verwendet.

Nachstehend wird das erfindungsgemäße Verfahren beschrieben.

Unter (Co)Polymerisaten im Sinne des erfindungsgemäßen Verfahrens sollen alle Polymerisate verstanden werden, die wenigstens Methacrylnitril oder Acrylnitril als Monomerenbaustein enthalten. Es sind daher zu nennen die Homopolymerisate, z. B. das Polymethacrylnitril sowie das Polyacrylnitril ; insbesondere sollen jedoch die Copolymerisate, die wenigstens die Monomeren Acrylnitril oder Methacrylnitril einpolymerisiert enthalten, genannt werden. Von den Copolymerisaten seien insbesondere die Styrol-Acrylnitril-Copolymerisate (SAN), die schlagfesten Polystyrolsorten mit NB-Kautschuk als Pfropfgrundlage und von den Pfropfmischpolymerisaten insbesondere die sogenannten ABS-Polymerisate genannt. Ferner kommen in Betracht Terpolymerisate, die Acrylnitril bzw. Methacrylnitril enthalten und die keine Pfropfmischpolymerisate sind.

Unter Dispersion im Sinne des erfindungsgemäßen Verfahrens sollen alle wäßrigen Dispersionen verstanden werden, die nach einem Emulsionspolymerisationsverfahren oder nach einem Masse-Suspensionsverfahren erhalten werden. Unter Dispersion ist dabei eine feine Verteilung von (Co)Polymerisatteilchen in Wasser (primäre oder sekundäre Dispersion) zu verstehen. Die Feststoffpartikelchen sind in der wäßrigen Phase mit den dem Fachmann bekannten Emulgatoren und Schutzkolloiden stabilisiert. Bei dem erfindungsgemäßen Verfahren können alle von der vorangegangenen Polymerisation stammenden Hilfsmittel, wie Reste von Startern, Emulgatoren, Schutzkolloide und dgl. vorliegen. Wesentlich für die erfindungsgemäße Behandlung der Dispersion mit dem Comonomeren ist, daß unter üblichen Polymerisationsbedingungen, die dem Fachmann bekannt sind, ein Comonomeres mit dem in der Dispersion vorliegenden Restmonomeren, z. B. Methacrylnitril oder Acrylnitril unter Polymerisationsbedingungen umgesetzt werden. Zur Durchführung dieser Behandlung (Polymerisation) werden übliche Bedingungen der Temperatur und des Drucks angewendet. Wesentlich für die Durchführung dieser Polymerisation ist die Verwendung von wasserlöslichen Initiatoren. Es seien genannt Kaliumpersulfate, Ammoniumpersulfat und $H_2O_2$, wobei letzteres gegebenenfalls zusammen mit Ammoniak oder Aminen angewendet wird. Insbesondere für die Durchführung des erfindungsgemäßen Verfahrens mit N-Vinylpyrrolidon werden gelegentlich mit gutem Erfolg $H_2O_2/NH_3$ oder $H_2O_2$/Amine angewendet.

Die erfindungsgemäß anzuwendenden Comonomeren haben die besondere Eigenschaft, daß sie mit Wasser unbegrenzt mischbar sind, die Polymerisation mit dem in der wäßrigen Phase sich befindenden Restmonomeren der Copolymerisate verläuft daher besonders gut. Die Comonomeren weisen die allgemeine Formel

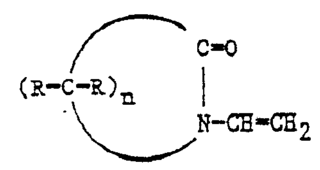

auf, in der die Indices und Substituenten stehen für n = 3, 4 und 5 und R = für Wasserstoff, Halogen, Alkyl, Carboxy und Nitril. Besonders bevorzugt werden N-Vinylpyrrolidon und N-Vinylcaprolactam zur Durchführung des erfindungsgemäßen Verfahrens. Von den Comonomeren werden 20 bis 200 Gew.-%, bezogen auf die in der Dispersion vorliegenden Restmonomeren an (Meth-)Acrylnitril angewendet. Die Umsetzung wird in der Regel so geführt, daß Rest-Acrylnitrilgehalte in der Dispersion von 0,001-0,1 % eingestellt werden. Das erfindungsgemäße Verfahren kann kontinuierlich oder diskontinuierlich durchgeführt werden ; die diskontinuierliche Verfahrensführung ist bevorzugt. Als Behandlungsdauer des erfindungsgemäßen Verfahrens kann in der Regel ein Viertel der der erfindungsgemäßen Behandlung vorgeschalteten Polymerisationsstufe angesehen werden. Die Polymerisationstemperatur liegt vorzugsweise im Bereich von 50 bis 90 °C für die genannten N-Vinyllactame, d. h. für die erfindungsgemäße Behandlung.

Nachstehend wird die Durchführung des erfindungsgemäßen Verfahrens allgemein beschrieben.

Wäßrige, aus mit Acrylnitril neben anderen Comonomeren aufgebaute Polymerisatdispersionen, die im Emulsions- bzw. Monomerenzulaufverfahren hergestellt werden, können mit einem geringen Rest-Acrylnitrilgehalt erhalten werden, wenn man in einem nachgeschalteten Polymerisationsabschnitt ein wasserlösliches Vinyllactam in Gegenwart eines Initiators zusetzt und auspolymerisiert. Der Anteil des zugesetzten Vinyllactams beträgt 20 bis 200 Gew.-%, bezogen auf nicht eingesetztes Acrylnitril in der Dispersion.

Die Bestimmung des nicht umgesetzten Acrylnitrils erfolgt gaschromatographisch mit einer 3 m langen Glassäule bei 110 °C. Als Säulenfüllung diente Silikonöl (OV-17[R] (eingetragenes Warenzeichen der Ohio-Valley Corp.)) auf einem Trägermaterial (Chromosorb[R] (Warenzeichen der Johns Manville Corp., New York)), das Trägergas ist Stickstoff. Die Bestimmung erfolgt gegen Dioxan als internen Standard.

Für die Durchführung der Versuche der Beispiele und der Vergleichsversuche wurden die nachstehend beschriebenen acrylnitrilhaltigen Dispersionen A und B verwendet.

Dispersion A : Butadien-Acrylnitrildispersion mit einem Feststoffgehalt von 40 Gew.-% und einem Butadien zu Acrylnitrilverhältnis von 70 : 30. Die Darstellung erfolgt, wie in Houben-Weyl, Methoden der organischen Chemie, Bd. 14/1, Georg Thieme Verlag, Stuttgart 1961, beschrieben. Acrylnitrilgehalt der Dispersion 0,5 Gew.-%, bezogen auf Dispersion.

Dispersion B : ABS-Pfropfdispersion

Durch Polymerisation von 55 Teilen Butadien in Gegenwart einer Lösung von 0,6 Teilen tert.-Dodecylmercaptan, 0,7 Teilen $C_{14}$-Na-Alkylsulfonat als Emulgator, 0,2 Teilen Kaliumperoxodisulfat und 0,2 Teilen Natriumpyrophosphat in 80 Teilen Wasser wird bei 65° ein Polybutadienlatex hergestellt. Nach Beendigung der Reaktion wird der Polymerisationsautoklav entspannt. Der Umsatz betrug 98 %.

Es wird ein Polybutadien erhalten, dessen mittlere Teilchengröße bei 0,1 µm liegt. Der erhaltene Latex wurde durch Zusatz von 25 Teilen einer Emulsion, eines Copolymeren aus 96 Teilen Ethylacrylat und 4 Teilen Methacrylsäureamid mit einem Feststoffgehalt von 10 Gewichtsteilen agglomeriert, wobei ein Polybutadienlatex mit einer mittleren Teilchengröße von 0,35 µm entstand. Nach Zusetzen von 40 Teilen Wasser, 0,4 Teilen Na-$C_{14}$-Alkylsulfonat und 0,2 Teilen Kaliumperoxodisulfat wurden 45 Teile einer Mischung aus Styrol und Acrylnitril im Verhältnis von 70 : 30 innerhalb von 4 Stunden zugeführt. Die Polymerisation erfolgte unter Rühren des Ansatzes bei 75 °C. (Acrylnitrilgehalt der Dispersion 0,5 Gew.-%, bezogen auf Dispersion).

Beispiele und Vergleichsversuche

Es wurden die in der Tabelle genannten Mengen an N-Vinylpyrrolidon bzw. N-Vinylcaprolactam zu den noch Acrylnitril enthaltenden Dispersionen A und B zugegeben und unter Zusatz von 0,1 Gew.% (bezogen auf Polymer) Kaliumperoxodisulfat bei 75 °C wurde weiterpolymerisiert. Der Acrylnitrilgehalt nach dieser Behandlung ist in der Tabelle wiedergegeben. Zum Vergleich sind die Acrylnitrilgehalte, die ohne Zusatz der Comonomeren erhalten wurden, ebenfalls in der Tabelle genannt.

| Beispiel Vergleich-versuch | Dispersion | Vinyllactam Gew.% | Ringgröße | Acrylnitrilgehalt nach der Behandlung Gew.%* |
|---|---|---|---|---|
| Vergleichs-versuch | A | - | - | 0,2 |
| 1 | | 0,2 | 3 | 0,02 |
| 2 | | 0,5 | 3 | 0,01 |
| 3 | | 0,8 | 3 | 0,005 |
| Vergleichs-versuch | B | - | - | 0,3 |
| 4 | | 0,2 | 3 | 0,02 |
| 5 | | 0,5 | 3 | 0,09 |
| 6 | | 0,8 | 3 | 0,002 |
| 7 | | 0,2 | 5 | 0,1 |
| 8 | | 0,5 | 5 | 0,05 |
| 9 | | 0,8 | 5 | 0,03 |

* Gew.% beziehen sich immer auf Dispersionsgewichtsteile

**Patentansprüche**

1. Verfahren zur Behandlung von (Meth-)Acrylnitril enthaltenden (Co)Polymerisaten, die in Form einer Dispersion in Wasser vorliegen, und wobei die Dispersion noch (Meth-)Acrylnitril als nicht umgesetzten Monomerenbaustein enthält, unter üblichen Polymerisationsbedingungen in Gegenwart von wasserlöslichen Initiatoren, gegebenenfalls in Gegenwart von üblichen Polymerisationshilfsstoffen, mit Comonomeren, dadurch gekennzeichnet, daß man als Comonomere N-Vinyllactame der allgemeinen Formel verwendet

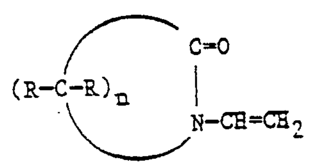

in der die Indices und Substituenten stehen für

n = 3, 4 und 5 und

R = Wasserstoff, Halogen, Alkyl, Carboxy oder Nitril.

2. Verfahren nach Anspruch 1, dadurch gekennzeichnet, daß N-Vinylpyrrolidon in einer Menge von 20 bis 200 Gew.%, bezogen auf nicht umgesetztes Monomeres (Meth-)acrylnitril in der Dispersion, angewendet wird.

3. Verwendung von (Co)polymerisat-Dispersionen gemäß Anspruch 1 zur Herstellung von Formteilen.

4. Formteile aus (Co)polymerisat-Dispersionen, hergestellt gemäß Anspruch 1.

**Claims**

1. A process for treating (meth)acrylonitrile-containing polymers or copolymers which are in the form of a dispersion in water, the dispersion additionally containing (meth)acrylonitrile as unreacted monomer, with comonomers under conventional polymerization conditions in the presence of water-soluble initiators and in the presence or absence of conventional polymerization aids, wherein the copolymers used are N-vinyllactams of the general formula

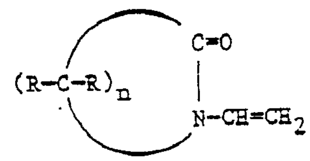

where

n is 3, 4 or 5, and

R is hydrogen, halogen, alkyl, carboxyl or nitrile.

2. A process as claimed in claim 1, wherein N-vinylpyrrolidone is used in an amount of from 20 to 200 % by weight, based on unreacted monomeric (meth)acrylonitrile in the dispersion.

3. The use of a polymer or copolymer dispersion according to claim 1 for the production of moulded parts.

4. Moulded parts produced from a polymer or copolymer dispersion prepared according to claim 1.

**Revendications**

1. Procédé de traitement de (co)polymères du nitrile (méth)acrylique en dispersion dans de l'eau, cette dispersion contenant encore du nitrile (méth)acrylique monomère non transformé, par des comonomères dans des conditions habituelles pour une polymérisation, en présence d'initiateurs hydrosolubles et éventuellement d'adjuvants de polymérisation usuels, caractérisé en ce que l'on emploie comme comonomères des N-vinyl-lactames de la formule générale

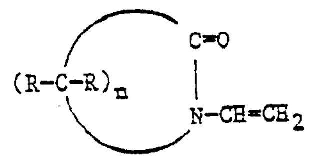

dans laquelle

le substituant R peut désigner un atome d'hydrogène ou d'halogène ou un groupe alkyle, carboxy ou nitrile et

l'indice n peut valoir 3, 4 ou 5.

2. Procédé suivant la revendication 1, caractérisé en ce que l'on emploie de la N-vinyl-pyrrolidone en une proportion comprise entre 20 et 200 % en poids par rapport au nitrile (méth)acrylique monomère non transformé, présent dans la dispersion.

3. Utilisation de dispersions de (co)polymères suivant la revendication 1 pour la production d'articles moulés.

4. Articles moulés, produits à partir de dispersions de (co)polymères préparées selon la revendication 1.